# EUROPÄISCHE PATENTSCHRIFT

(11) **EP 2 076 682 B1**
(45) Veröffentlichungstag und Bekanntmachung des Hinweises auf die Patenterteilung: **21.03.2012**
(21) Anmeldenummer: 07802877.6
(22) Anmeldetag: 24.08.2007
(51) Int. Cl.: F16D 3/04

(54) **KUPPLUNGSVORRICHTUNG**
COUPLING DEVICE
DISPOSITIF D'ACCOUPLEMENT

(30) Priorität: 14.10.2006 DE 102006048678
(43) Veröffentlichungstag der Anmeldung: 08.07.2009
(73) Patentinhaber: Pierburg GmbH, 41460 Neuss (DE)
(72) Erfinder: MÜNICH, Marc-Anton, 14476 Gross Glienicke (DE); VOIGTLÄNDER, Karsten, 40625 Düsseldorf (DE); VIERKÖTTER, Michael, 51105 Köln (DE)
(74) Vertreter: Patentanwälte ter Smitten Eberlein Rütten Partnerschaftsgesellschaft
(86) Internationale Anmeldenummer: PCT/EP2007/058831
(87) Internationale Veröffentlichungsnummer: WO 2008/043600

(56) Entgegenhaltungen:
- WO-A-01/31216
- WO-A-93/09358
- DE-U- 20 014 606
- JP-A- 2005 083 443
- US-A- 1 459 035
- US-A- 1 501 647

## Beschreibung

Die Erfindung betrifft eine Kupplungsvorrichtung zur Übertragung eines Drehmomentes von einer ersten Welle auf eine axial gegenüberliegende zweite Welle, wobei an den Wellen Endabschnitte angeordnet sind, an welchen radial gegenüberliegende, Vorsprünge und / oder Ausnehmungen ausgebildet sind, die in Vorsprünge und / oder Ausnehmungen eines Kupplungsgliedes greifen, wobei die mit dem an der ersten Welle angeordneten Endabschnitt korrespondierenden Ausnehmungen des Kupplungsgliedes im wesentlichen um 90° versetzt zu den mit dem an der zweiten Welle angeordneten Endabschnitt korrespondierenden Vorsprüngen angeordnet sind und das Kupplungsglied die an den Wellen angeordneten Endabschnitte zumindest teilweise umgibt, wobei sich die an den beiden Wellen angeordneten Endabschnitte axial unmittelbar gegenüberliegen und das Kupplungsglied durch die Endabschnitte in seiner Lage fixiert ist.

Kupplungsvorrichtungen dieser Art sind unter den Begriffen Oldham-Kupplung oder Doppelschleifengetriebe allgemein bekannt und werden in einer Vielzahl von Anmeldungen beschrieben. Diese sind beispielsweise aus dem Automobilbereich bekannt, wo sie zur Kopplung einer Abtriebswelle einer Stellvorrichtung an eine zu verstellende Welle dienen, über die beispielsweise Klappen verstellt werden können.

In der JP 2005083443 A werden verschiedene Versionen derartiger Kupplungsvorrichtungen offenbart. In der ursprünglichen Ausbildung enthalten die Endabschnitte der Wellen radial verlaufende Vorsprünge, welche sich über den gesamten Durchmesser erstrecken. Entsprechende Ausnehmungen sind in einem zwischen den beiden Wellenendstücken ausgebildeten Kupplungsglied ausgebildet, wobei diese im 90° Winkel zueinander liegen. Durch eine derartige Ausführung können leichte axiale und radiale Versätze zwischen zwei Wellen ausgeglichen werden.

Auch werden in dieser Schrift Ausführungen offenbart, bei denen an den Wellenabschnitten radial verlaufende Ausnehmungen bzw. Vorsprünge ausgebildet sind. Unter Zwischenlage eines entsprechend ausgebildeten Kupplungsgliedes, welches korrespondierende, sich axial erstreckende Vorsprünge aufweist, wird eine Kopplung zu den Endabschnitten der Wellen geschaffen.

Die bekannten Ausführungen weisen jedoch den Nachteil auf, dass beim heutzutage äußerst beschränkten Bauraum im Motorbereich eines Automobils häufig der benötigte Bauraum zum Anbringen einer derartigen Kupplung nicht vorhanden ist.

Des Weiteren ist aus der DE 200 14 606 U1 eine Kupplungsvorrichtung bekannt, bei der an den Wellenenden Abschnitte zur formschlüssigen Verbindung mit einem Kupplungselement ausgebildet sind, die sich in axialer und radialer Richtung erstrecken und Ausnehmungen und Vorsprünge an jedem Wellenende aufweisen. Deren Herstellung ist aufgrund der komplizierten Formgebung schwierig und kostspielig. Ein axialer Versatz der Wellen kann nicht ausgeglichen werden.

Daher ist es Aufgabe der Erfindung, eine Kupplungsvorrichtung zu schaffen, bei der der benötigte Bauraum im Vergleich zu bekannten Ausführungen verringert wird, wobei gleichzeitig ein möglicher axialer und radialer Versatz der Wellen zueinander weiterhin zuverlässig ausgeglichen werden soll.

Diese Aufgabe wird dadurch gelöst, dass der an der ersten Welle angeordnete Endabschnitt im Wesentlichen die Form eines Zylinderkörpers mit sich nur über seine gesamte axiale länge erstreckenden, radial nach außen weisenden Vorsprüngen aufweist und dass der an der zweiten Welle angeordnete Endabschnitt im Querschnitt die Form eines Kreisausschnittes mit am Umfang ausgebildeten nach radial innen Ausnehmungen aufweist. Somit entfällt die axiale Baulänge des in bekannten Ausführungen dazwischenliegenden Kupplungsgliedes, so dass der insgesamt benötigte axiale Bauraum verringert wird.

In einer weiterführenden Ausführungsform weist der an der ersten Welle angeordnete Endabschnitt radial nach außen weisende Vorsprünge auf und der an der zweiten Welle angeordnete Endabschnitt radial nach innen weisende Ausnehmungen auf, wobei das Kupplungsglied in Richtung zur ersten Welle durch die Vorsprünge des an der ersten Welle angeordneten Endabschnitts in seiner Lage fixiert ist und in Richtung zur zweiten Welle abschnittsweise gegen den an der zweiten Welle angeordneten Endabschnitt anliegt. Somit entsteht auf einfache Weise eine radiale und axiale Fixierung des Kupplungsgliedes auf den Endabschnitten der beiden Wellen.

Vorzugsweise umgibt ein erster axialer Abschnitt des Kupplungsgliedes den an der ersten Welle angeordneten Endabschnitt zwischen den Vorsprüngen und weist im Bereich der Vorsprünge des Endabschnitts die Ausnehmungen auf, wobei sich an den ersten axialen Abschnitt des Kupplungsgliedes ein zweiter axialer Abschnitt in Richtung zur zweiten Welle anschließt, der aus vier Vorsprüngen besteht, wovon zwei Vorsprünge in die Ausnehmungen des an der zweiten Welle angeordneten Endabschnitts greifen und zwei die durch die Vorsprünge getrennten Umfangsenden des ersten axialen Abschnitts miteinander verbinden und den Endabschnitt der zweiten Welle teilweise umgeben. Durch eine derartige Ausführung des Kupplungsgliedes kann dieses als Kunststoffteil im Spritzgussverfahren kostengünstig hergestellt werden, wobei gleichzeitig eine ausreichende Festigkeit zur Übertragung des Drehmomentes gegeben ist. Aufgrund des Wegfalls überflüssiger zusätzlicher Flächen ist auch das Gewicht einer derartigen Kupplung sehr gering.

In einer weiterführenden Ausführungsform ist das Kupplungsglied im Wesentlichen ringförmig ausgebildet, wobei der Innendurchmesser des Kupplungsgliedes größer als ein Außendurchmesser des an der ersten Welle angeordneten Endabschnitts ist, der im Wesentlichen zylinderförmig ausgebildet ist. Das Kupplungsglied dient somit als umgebendes Teil für den Endabschnitt der ersten Welle, wobei die Anforderungen an die Herstelltoleranzen sehr gering sind und ein geringer axialer Versatz der Wellen einfach ausgeglichen werden kann. Des Weiteren sind derartige Formen einfach herzustellen.

In einer weiteren vorteilhaften Ausgestaltung ist der Endabschnitt der zweiten Welle im Querschnitt kreisausschnittsförmig ausgebildet, der einen Durchmesser aufweist, der größer ist als der Innendurchmesser des Kupplungsgliedes, wobei der Kreisausschnitt durch zwei parallel verlaufende gerade Schnittkanten ausgebildet ist, die gegenüberliegend zum Mittelpunkt des Endbereiches der zweiten Welle angeordnet sind, und wobei die Ausnehmungen im Bereich der Kreisaußenfläche ausgebildet sind. Auf diese Weise ist auch der Endabschnitt der zweiten Welle sehr kostengünstig und einfach herstellbar und eine Anlage des ringförmigen Kupplungsgliedes einfach zu verwirklichen.

Die Endabschnitte der Wellen können dabei sowohl einteilig mit der Welle oder einem Wellenstumpf ausgebildet werden als auch als separates Bauteil fest mit der Welle verbunden werden.

Durch die beschriebenen Ausführungen wird eine Kupplungsvorrichtung geschaffen, welche einfach und kostengünstig herstellbar ist und gleichzeitig den axial benötigten Bauraum reduziert. Die Drehmomentenübertragung ist somit vollständig auf den Umfangsbereich der an den Wellen angeordneten Endabschnitte verteilt.

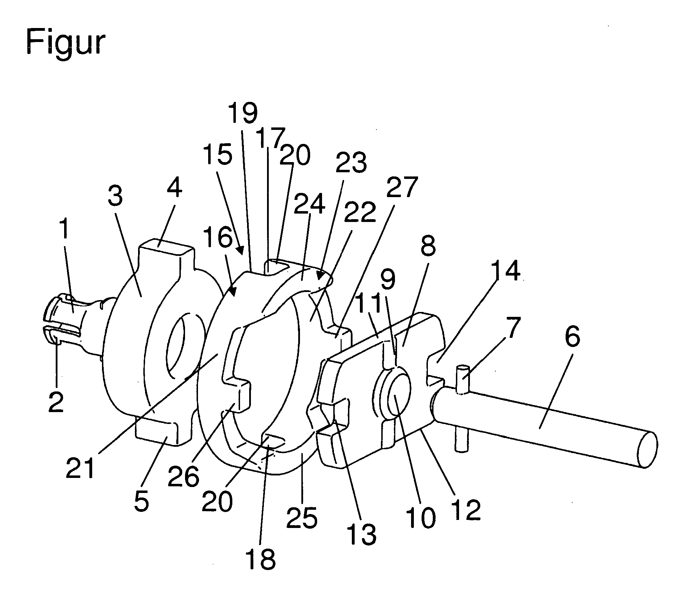

Ein erfindungsgemäßes Ausführungsbeispiel ist in der Figur dargestellt und wird nachfolgend beschrieben.

Die Figur zeigt eine gesprengte Darstellung einer erfindungsgemäßen Kupplungsvorrichtung in perspektivischer Ansicht.

Die in der Figur dargestellte erfindungsgemäße Kupplungsvorrichtung besteht aus einer ersten Welle 1, welche in vorliegendem Ausführungsbeispiel als Wellenstumpf ausgebildet ist, der über eine Klipsverbindung beispielsweise mit einer entsprechend geformten Abtriebswelle einer Stellvorrichtung verbunden werden kann.

Die Welle 1 weist einen Endabschnitt 3 auf, der im Vergleich zum Wellendurchmesser deutlich erweitert ist und zwei radial nach außen weisende Vorsprünge 4, 5 aufweist. Im Übrigen weist dieser Endabschnitt 3 im Wesentlichen die Form eines kurzen Zylinderkörpers auf. Axial im Wesentlichen gegenüberliegend zur ersten Welle 1 ist eine zweite Welle 6 angeordnet, durch die radial ein Stift 7 ragt, über den eine drehfeste Verbindung zu einem Endabschnitt 8 hergestellt wird. Eine mit dem Stift 7 korrespondierende Kerbe 9 sowie ein Durchgangsloch 10 sind zur Befestigung der zweiten Welle 6 am Endabschnitt 8 vorgesehen. Selbstverständlich wäre es auch möglich, die Welle mit dem zweiten Endabschnitt 8 einteilig herzustellen oder den Endabschnitt 8 direkt an die Welle 6 anzuspritzen. Auch sind andere formschlüssige Verbindungen zur Drehmomentübertragung vom Endabschnitt 8 auf die Welle 6 denkbar, beispielsweise über eine Rändelung oder ein Polygonprofil. Die Welle 6 kann beispielsweise als Klappenwelle ausgebildet sein und zum Antrieb verschiedenartiger Klappenkörper dienen.

Der Endabschnitt 8 weist im Querschnitt die Form eines Kreisausschnittes auf, wobei Schnittkanten 11, 12 an gegenüberliegenden Seiten des Durchgangsloches 10 beziehungsweise des Kreismittelpunktes parallel zueinander ausgebildet sind. Um 90° versetzt zu diesen Schnittkanten 11, 12 sind jeweils im Bereich des Außendurchmessers nach radial innen weisende Ausnehmungen 13, 14 am Endabschnitt 8 ausgebildet.

Zur drehfesten Verbindung der Endabschnitte 3, 8 bzw. der ersten Welle 1 mit der zweiten Welle 6 dient ein Kupplungsglied 15. Dieses Kupplungsglied 15 weist einen ersten axialen Abschnitt 16 auf, der im Wesentlichen ringförmig ausgebildet ist und dessen Innendurchmesser größer ist als der Außendurchmesser des Endabschnittes 3 der ersten Welle 1, so dass im zusammengebauten Zustand der erste axiale Abschnitt 16 des Kupplungsgliedes den Endabschnitt 3 der ersten Welle 1 umgibt. Hierzu weist der erste axiale Abschnitt 16 des Kupplungsgliedes 15 zwei Ausnehmungen 17, 18 auf, durch die die Ringform des Kupplungsgliedes 15 unterbrochen wird, so dass zu beiden Seiten der Ausnehmungen 17, 18 jeweils Umfangsenden 19, 20 angeordnet sind. Somit besteht der erste axiale Abschnitt 16 im Wesentlichen aus zwei gegenüberliegenden Ringsegmenten 21, 22, welche durch einen zweiten axialen Abschnitt 23, der sich an den ersten axialen Abschnitt 16 in Richtung zur zweiten Welle 6 anschließt, miteinander verbunden werden. Es sei darauf hingewiesen, dass die beiden axialen Abschnitte 16, 23 einstückig hergestellt sind.

Der zweite axiale Abschnitt 23 besteht im Wesentlichen aus vier wiederum ringsegmentförmigen sich in axialer Richtung erstreckenden Vorsprüngen 24, 25, 26, 27, wobei zwei die beiden Ringsegmente 21, 22 verbindende Vorsprünge 24, 25 eine ausreichende Umfangslänge aufweisen, um dem Kupplungsglied 15 eine ausreichende Stabilität zu verleihen. Die beiden weiteren Vorsprünge 26, 27 dienen als Kopplungsvorrichtung zum Endabschnitt 8 der zweiten Welle 6 und sind derart geformt, dass sie in die Ausnehmungen 13, 14 des Endabschnitts 8 greifen. Die verbindenden Vorsprünge 24, 25 liegen somit im Bereich der ausgeschnittenen Kreissegmente des Endabschnitt 18 jenseits der Schnittkanten 11 und 12, so dass der zweite axiale Abschnitt 23 im Wesentlichen um den Endabschnitt 8 der zweiten Welle 6 im zusammengebauten Zustand liegt.

Der zur zweiten Welle 6 weisende Bereich des ersten axialen Abschnitts 16 des Kupplungsgliedes 15, an dem keiner der Vorsprünge 24, 25, 26, 27 ausgebildet ist, liegt gegen das zur ersten Welle weisende axiale Ende des an der zweiten Welle 6 angeordneten Endabschnitts 8 an, so dass durch die Vorsprünge 4,5 und den radial außen liegenden Bereich des Endabschnitts 8 das Kupplungsglied 15 axial fixiert wird. Der Außendurchmesser des Kreissegmentes des zweiten Endabschnitts entspricht in etwa dem Außendurchmesser des Kupplungsgliedes 15.

Die das Drehmoment übertragenden Vorsprünge 24, 25 liegen, wie bei Oldham-Kupplungen bekannt, um etwa 90° versetzt zu den Ausnehmungen 17, 18 des Kupplungsgliedes 15, so dass ein Verrutschen der Endabschnitte 3, 8 zueinander verhindert wird.

Wird nun die erste Welle 1 und somit der Endabschnitt 3 gedreht, so wird durch die Vorsprünge 4, 5 die Drehbewegung über die Ausnehmungen 17, 18 auf das Kupplungsglied 15 übertragen. Über die Vorsprünge 26, 27 wird diese Drehbewegung wiederum über die Ausnehmungen 13, 14 auf den Endabschnitt 8 und somit die zweite Welle 6 übertragen.

Es wird deutlich, dass bei einer derartigen Ausführung die beiden Endabschnitte 3 und 8 direkt ohne zwischenlage eines Teils des Kupplungsgliedes 15 einander axial gegenüberliegen, wodurch die axiale Baulänge im Vergleich zu bekannten Ausführungen deutlich reduziert werden kann. Ein leichter axialer oder radialer Versatz der Wellen 1 und 6 zueinander wird durch eine derartige Kupplung wie auch bei anderen Oldham-Kupplungen bekannt, ausgeglichen, so dass keine zusätzliche Kosten generierenden Fertigungstoleranzen beachtet werden müssen.

Es sollte klar sein, dass die Bauform insbesondere bezüglich der genauen Formen der beiden Endabschnitte 3, 8 der Wellen aber auch des Kupplungsgliedes 15 im Sinne der Erfindung veränderbar sind, wobei die direkte Lage der beiden Endabschnitte 3, 8 ohne Zwischenlage im Sinne der Erfindung beizubehalten ist.

## Patentansprüche

1. Kupplungsvorrichtung zur Übertragung eines Drehmomentes von einer ersten Welle auf eine axial gegenüberliegende zweite Welle, wobei an den Wellen Endabschnitte angeordnet sind, an welchen radial gegenüberliegende, Vorsprünge und / oder Ausnehmungen ausgebildet sind, die in Vorsprünge und / oder Ausnehmungen eines Kupplungsgliedes greifen, wobei die mit dem an der ersten Welle angeordneten Endabschnitt korrespondierenden Ausnehmungen des Kupplungsgliedes im wesentlichen um 90° versetzt zu den mit dem an der zweiten Welle angeordneten Endabschnitt korrespondierenden Vorsprüngen angeordnet sind und das Kupplungsglied (15) die an den Wellen (1, 6) angeordneten Endabschnitte (3, 8) zumindest teilweise umgibt, wobei sich die an den beiden Wellen (1, 6) angeordneten Endabschnitte (3, 8) axial unmittelbar gegenüberliegen und das Kupplungsglied (15) durch die Endabschnitte (3, 8) in seiner Lage fixiert ist, **dadurch gekennzeichnet, dass** der an der ersten Welle (1) angeordnete Endabschnitt (3) im Wesentlichen die Form eines Zylinderkörpers mit sich nur über seine gesamte axiale Länge erstreckenden, radial nach außen weisenden Vorsprüngen (4, 5) aufweist und dass der an der zweiten Welle (6) angeordnete Endabschnitt (8) im Querschnitt die Form eines Kreisausschnittes mit am Umfang ausgebildeten nach radial innen weisenden Ausnehmungen (13, 14) aufweist.

2. Kupplungsvorrichtung nach Anspruch 1, **dadurch gekennzeichnet, dass** das Kupplungsglied (15) in Richtung zur ersten Welle (1) durch die Vorsprünge (4, 5) des an der ersten Welle (1) angeordneten Endabschnitts (3) in seiner Lage fixiert ist und in Richtung zur zweiten Welle (6) abschnittsweise gegen den an der zweiten Welle (6) angeordneten Endabschnitt (8) anliegt.

3. Kupplungsvorrichtung nach Anspruch 1 oder 2, **dadurch gekennzeichnet, dass** ein erster axialer Abschnitt (16) des Kupplungsgliedes (15) den an der ersten Welle (1) angeordneten Endabschnitt (3) zwischen den Vorsprüngen (4, 5) umgibt und im Bereich der Vorsprünge (4, 5) des Endabschnitts (3) die Ausnehmungen (17, 18) aufweist, wobei sich an den ersten axialen Abschnitt (16) des Kupplungsgliedes (15) ein zweiter axialer Abschnitt (23) in Richtung zur zweiten Welle (6) anschließt, der aus vier Vorsprüngen (24, 25, 26, 27) besteht, wovon zwei Vorsprünge (26, 27) in die Ausnehmungen (13, 14) des an der zweiten Welle (6) angeordneten Endabschnitts (8) greifen und zwei die durch die Vorsprünge (4, 5) getrennten Umfangsenden (19, 20) des ersten axialen Abschnitts (16) miteinander verbinden und den Endabschnitt (8) der zweiten Welle (6) teilweise umgeben.

4. Kupplungsvorrichtung nach einem der vorhergehenden Ansprüche, **dadurch gekennzeichnet, dass** das Kupplungsglied (15) im Wesentlichen ringförmig ausgebildet ist, wobei der Innendurchmesser des Kupplungsgliedes (15) größer als ein Außendurchmesser des an der ersten Welle (1) angeordneten Endabschnitts (3) ist, der im Wesentlichen zylinderförmig ausgebildet ist.

5. Kupplungsvorrichtung nach einem der vorhergehenden Ansprüche, **dadurch gekennzeichnet, dass** der Endabschnitt (8) der zweiten Welle (6) größer ist als der Innendurchmesser des Kupplungsgliedes (15), wobei der Kreisausschnitt durch zwei parallel verlaufende gerade Schnittkanten (11, 12) ausgebildet ist, die radial gegenüberliegend zum Mittelpunkt des an der zweiten Welle (6) angeordneten Endabschnitts (8) angeordnet sind und wobei die Ausnehmungen (13, 14) im Bereich der Kreisaußenfläche ausgebildet sind.

## Claims

1. Coupling device for the transmission of a torque from a first shaft to an axially opposite second shaft, the shafts being provided with end sections at which radially opposite projections and/or recesses are formed that engage with projections and/or recesses of a coupling member, wherein the recesses of the coupling member corresponding to the end section provided at the first shaft are arranged offset by substantially 90° with respect to the projections corresponding to the end section provided at the second shaft and the coupling element (15) at least partly encloses the end sections (3, 8) provided on the shafts (1, 6), wherein the end sections (3, 8) provided at the two shafts (1, 6) directly face each other in the axial direction and the coupling element (15) is fixed in its position by the end sections (3, 8), **characterized in that** the end section (3) provided at the first shaft (1) has the general shape of a cylindrical body with projections (4, 5) extending only over its entire axial length and being directed radially outward, and that the end section (8) provided at the second shaft (6) has the sectional shape of a sector having radially inward directed recesses (13, 14) at its circumference.

2. Coupling device of claim 1, **characterized in that** the coupling member (15) is fixed in its position towards the first shaft (1) by means of the projections (4, 5) of the end section (3) provided at the first shaft (1) and, towards the second shaft (6), sectionally abuts against the end section (8) provided at the second shaft (6).

3. Coupling device of claim 1 or 2, **characterized in that** a first axial section (16) of the coupling member (15) encloses the end section (3) provided at the first shaft (1) between the projections (4, 5) and comprises recesses (17, 18) in the region of the projections (4, 5) of the end section (3), wherein a second axial section (23) adjoins the first axial section (16) of the coupling member (15) in the direction of the second shaft (6), which second section is formed by four projections (24, 25, 26, 27), wherein two of the projections (26, 27) engage the recesses (13, 14) of the end section (8) provided at the second shaft (6) and two projections connect the circumferential ends (18, 20) of the first axial section (16) separated by the projections (4, 5) and partly enclose the end section (8) of the second shaft (6).

4. Coupling device of one of the preceding claims, **characterized in that** the coupling member (15) is substantially annular, wherein the inner diameter of the coupling member (15) is larger than the outer diameter of the end section (3) provided at the first shaft (1), the end section being substantially cylindrical.

5. Coupling device of one of the preceding claims, **characterized in that** the end section (8) of the second shaft (6) is larger than the inner diameter of the coupling member (15), wherein the sector is formed by two parallel linear cut edges (11, 12) that are arranged radially opposite the centre of the end section (8) provided at the second shaft (6), and wherein the recesses (13, 14) are arranged in the region of the outer surface of the circle.

## Revendications

1. Dispositif d'accouplement pour la transmission d'un couple d'un premier arbre à un deuxième arbre axialement opposé, lesdits arbres étant munis de sections d'extrémité formées avec des saillies et/ou des crans radialement opposés les uns aux autres qui engagent des saillies et/ou des crans d'un élément d'accouplement, les crans dudit élément d'accouplement correspondant à la section d'extrémité disposée sur le premier arbre étant décalés sensiblement par 90° par rapport aux saillies correspondant à la section d'extrémité disposée sur le deuxième arbre, et ledit élément d'accouplement (15) entoure au moins partiellement lesdites sections d'extrémité (3, 8) disposées sur lesdits arbres (1, 6), les sections d'extrémité (3, 8) disposées sur les deux arbres étant disposées directement l'une en face de l'autre dans la direction axiale, et ledit élément d'accouplement (15) étant fixé dans sa position par lesdites sections d'extrémité (3, 8), **caractérisé en ce que** la section d'extrémité (3) disposée sur le premier arbre (1) a la forme générale d'un corps cylindrique avec des saillies (4, 5) qui s'étendent exclusivement le long de sa longueur axiale et sont dirigées radialement vers l'extérieur, et que la section d'extrémité (8) disposée sur le deuxième arbre (6) a une contour en coupe transversal d'un secteur de cercle avec des crans (13, 14) formés dans le périmètre et dirigés radialement vers l'intérieur.

2. Dispositif d'accouplement selon la revendication 1, **caractérisé en ce que** ledit élément d'accouplement (15) est fixé, vers ledit premier arbre (1), par les saillies (4, 5) de la section d'extrémité (3) disposée sur ledit premier arbre (1) et que, vers ledit deuxième arbre (6), il s'appuie par endroits sur la section d'extrémité (8) disposée sur ledit deuxième arbre (6).

3. Dispositif d'accouplement selon les revendications 1 ou 2, **caractérisé en ce qu'**une première section axiale (16) dudit élément d'accouplement (15) entoure ladite section d'extrémité (3) disposée sur ledit premier arbre (1) entre lesdites saillies (4, 5) et comprend des crans (17, 18) dans la région des saillies (4, 5) de ladite section d'extrémité (3), ladite première section axiale (16) dudit élément d'accouplement (15) étant suivie, dans la direction vers le deuxième arbre (6), d'une deuxième section axiale (25) formée par quatre saillies (24, 25, 26, 27), dont deux saillies (26, 27) engagent dans les crans (13, 14) de ladite section d'extrémité (8) disposée sur le deuxième arbre (6) et dont deux saillies lient les extrémités circonférentielles (19, 20) de ladite première section axiale (16), qui sont séparées par les saillies (4, 5), et entourent partiellement ladite section d'extrémité (8) du deuxième arbre (6).

4. Dispositif d'accouplement selon l'une quelconque des revendications précédentes, **caractérisé en ce que** ledit élément d'accouplement (15) est sensiblement annulaire, le diamètre intérieur dudit élément d'accouplement (15) étant supérieur au diamètre extérieur de ladite section d'extrémité (3) disposée sur ledit premier arbre (1) qui est sensiblement cylindrique.

5. Dispositif d'accouplement selon l'une quelconque des revendications précédentes, **caractérisé en ce que** ladite section d'extrémité (8) disposée sur le deuxième arbre (6) est plus grande que le diamètre intérieur dudit élément d'accouplement (15), ledit secteur de cercle étant formé par deux lignes de coupe (11, 12) linéaires parallèles situées radialement opposé au centre de ladite section d'extrémité (8) disposée sur ledit deuxième arbre (6), et lesdits crans (13, 14) étant formés dans la région de la surface extérieure du cercle.
